(19) **Europäisches Patentamt / European Patent Office / Office européen des brevets**

(11) **EP 3 700 763 B1**

(12) **FASCICULE DE BREVET EUROPEEN**

(45) Date de publication et mention de la délivrance du brevet:
**07.06.2023 Bulletin 2023/23**

(21) Numéro de dépôt: **18796617.1**

(22) Date de dépôt: **26.10.2018**

(51) Classification Internationale des Brevets (IPC):
**B60C 23/04** *(2006.01)*    **B60C 23/20** *(2006.01)*

(52) Classification Coopérative des Brevets (CPC):
**B60C 23/20; B60C 23/0476; B60C 23/0479**

(86) Numéro de dépôt international:
**PCT/EP2018/079477**

(87) Numéro de publication internationale:
**WO 2019/081746 (02.05.2019 Gazette 2019/18)**

(54) **PROCEDE DE DETERMINATION D'UNE PRESSION PRECONISEE DE GONFLAGE POUR PNEU AERONEF, ET PROCEDES DE MAINTENANCE ASSOCIES**

VERFAHREN ZUR FESTLEGUNG EINES EMPFOHLENEN DRUCKS FÜR EINEN FLUGZEUGSREIFEN, DESSEN WARTUNGSVERFAHREN

METHOD FOR DETERMINING THE ADVOCATED PRESSURE OF AN AEROPLANE TIRE, ASSOCIATED MAINTENANCE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2017 FR 1760161**

(43) Date de publication de la demande:
**02.09.2020 Bulletin 2020/36**

(73) Titulaires:
• **Compagnie Générale des Etablissements Michelin**
  **63000 Clermont-Ferrand (FR)**
• **Safran**
  **75015 Paris (FR)**
• **Safran Landing Systems**
  **78140 Vélizy-Villacoublay (FR)**
• **Safran Electronics & Defense**
  **92100 Boulogne-Billancourt (FR)**

(72) Inventeurs:
• **ARNOUX, Michael**
  **63040 Clermont-Ferrand Cedex 9 (FR)**
• **NEBA, Eric Carin**
  **63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 3 069 903      WO-A1-2009/036547**
**DE-A1- 2 626 475      FR-A1- 2 829 423**
**US-A1- 2015 224 831**

**Description**

DOMAINE DE L'INVENTION

La présente invention se situe dans le domaine de l'aéronautique, et plus particulièrement dans le domaine de l'entretien et de la maintenance des pneumatiques aéronef. De manière plus précise, l'invention concerne le suivi de la pression de pneumatiques aéronef.

On sait qu'un mauvais gonflage de pneumatiques avion peut engendrer de nombreux problèmes. Ainsi, un surgonflage peut conduire à une dégradation de la bande de roulement, soit par une usure irrégulière, ou en la rendant plus sensible aux altérations mécaniques. A l'inverse, un sous-gonflage augmente considérablement les contraintes et l'échauffement dans le pneu, ce qui peut réduire la durée de vie du pneu, voire générer des risques sécuritaires tel qu'un éclatement du pneumatique ou un déchapage.

Pour remédier à cette situation, il est préconisé par les pneumaticiens d'effectuer un contrôle journalier de la pression des pneumatiques. Il est en outre généralement précisé de toujours effectuer ce contrôle lorsque les pneus sont froids, c'est-à-dire lorsque la température interne des pneus est sensiblement égale à la température ambiante. Il est également déconseillé de dégonfler un pneumatique chaud.

On connaît ainsi des documents comportant des recommandations pour le gonflage à froid des pneumatiques avion, et les pressions de consigne (Pc) à appliquer en fonction du type de pneus, de leurs dimensions, et éventuellement de la charge de l'avion. Ces documents indiquent également des préconisations de maintenance de pression, en fonction des écarts à Pc.

Les documents suivants peuvent être cités comme art antérieur : EP 3 069 903 A1, US 2015/224831 A1, FR 2 829 423 A1, DE 26 26 475 A1 et WO 2009/036547 A1.

Or, avec l'augmentation du trafic aérien, il arrive de plus en plus fréquemment que les avions ne restent pas au sol suffisamment longtemps entre un atterrissage et le décollage suivant pour que la maintenance des pneumatiques soit effectuée à froid. En outre, de forts écarts de température ambiante entre un aéroport de décollage et d'atterrissage, par exemple allant de valeurs supérieures à 50°C à des valeurs inférieures à -20°C, peuvent biaiser les actions de détection. Par conséquent, il s'avère aujourd'hui de plus en plus compliqué de garantir une bonne pression des pneumatiques avion dans toutes les conditions.

Ainsi, l'invention vise à proposer une solution pour remédier aux inconvénients précités.

BREVE DESCRIPTION DE L'INVENTION

L'invention, définie dans la revendication indépendante 1 ci-jointe, concerne ainsi un procédé de détermination d'une pression attendue de gonflage pour un pneumatique avion comportant un capteur de pression et de température en contact avec le gaz de gonflage du pneumatique. Ce procédé comprend les étapes suivantes :

- dans une étape préliminaire, on enregistre, dans une mémoire du capteur de pression et température, une pression $P_0$ et une température $T_0$ du pneumatique mesurés à un temps $t_0$. Le temps t0 est préférentiellement enregistré également.
- à un instant t, on mesure la température d'air interne du pneumatique $T_m$, et la température d'air ambiante $T_{amb}$, et on compare ces deux valeurs. De manière préférentielle, aucune action de maintenance de pression n'a eu lieu entre les temps t et $t_0$.
- si les deux températures sont égales ou sensiblement égales, on détermine alors une pression attendue à l'instant t, $P_{attendue\_hom}$ sous la forme $P_{attendue\_hom} = P_0 {}^*T_m/T_0$.
- si les deux températures sont différentes, on détermine alors une pression attendue à l'instant t, $P_{attendue\_het}$, sous la forme $P_{attendue\_hét} = F(T_m, P_0, T_0$ et $\theta)$ où F est une fonction linéaire et/ou polynomiale, et $\theta$ dépend de la position du capteur de pression et température dans le pneumatique à l'instant t.

Par « pression attendue » on entend la pression qui devrait théoriquement être présente dans les pneumatiques, à l'instant t pour une température interne $T_m$, en cas d'étanchéité parfaite du pneumatique.

Ainsi, un procédé selon l'invention met en oeuvre deux lois différentes :

- une loi dite « d'homogénéité », dans le cas où le pneu est à température ambiante, et où l'on peut donc supposer que la température est homogène dans l'ensemble du pneu, et
- une loi dite « d'hétérogénéité », dans le cas où le pneu n'a pas encore complètement refroidi jusqu'à température ambiante.

Dans ce deuxième cas, on a constaté que le refroidissement dans le pneumatique ne s'effectue pas de manière homogène, et qu'il est donc nécessaire de tenir compte de la position du capteur à l'instant de la mesure, pour obtenir des données correctes. En effet, lorsqu'un pneu est en phase de refroidissement, la partie inférieure du volume de gaz de gonflage contenue dans le pneumatique est à une température inférieure à celle de la partie supérieure du volume de gaz de gonflage du pneumatique. Pour tenir compte de ce différentiel, on introduit alors, dans la formule d'hétérogénéité, un paramètre dépendant de la position du capteur. Selon les modes de réalisation, ce paramètre $\theta$ peut correspondre à la hauteur du capteur par rapport au sol, ou bien à la position angulaire, ou azimut, du capteur. En effet, ces deux informations permettent de déterminer dans quelle zone se trouve le capteur, parmi les trois précédemment mentionnées.

Un procédé selon l'invention permet donc de déterminer une pression attendue pour le pneumatique quelles que soient les conditions de température dans lesquelles se trouve le pneumatique, ce qui permet donc de prévoir les opérations de maintenance dès l'atterrissage de l'avion, sans avoir à attendre un refroidissement complet du pneumatique.

Dans un mode de réalisation avantageux, la fonction F est une fonction linéaire, et on a alors $P_{attendue\_het}(t) = A(\theta) * (T_m(t) - T_0) + P_0$ où $A(\theta) = p_1 * \theta + p_2$ avec $p_1$ et $p_2$ qui sont des constantes prédéterminées.

Dans un autre mode de réalisation avantageux, la fonction F est une fonction polynomiale, et on a alors

$$P_{attendue\_het} = A(\theta) * \left(T_{m(t)} - T_0\right)^2 + B(\theta) * (T_m - T_0) + P0$$

Où $A(\theta)$ et $B(\theta)$ sont des fonctions polynomiales prédéterminées.

L'invention concerne également un procédé de détection de perte de pression pour pneumatique avion, comprenant les étapes suivantes :

- On détermine une pression attendue $P_{att}$ du pneumatique en utilisant un procédé tel que précédemment décrit,

- On mesure la pression d'air interne $P_m$ du pneumatique à l'instant t,

- On compare les valeurs $P_{att}$ et Pm, et

  ◦ Si $P_{att} = P_m$, alors aucune perte de pression n'est détectée,

  ◦ Si $P_{att} > P_m$, on détermine une vitesse de perte de pression $V_p$

  ◦ Si $V_p$ est inférieure à un seuil prédéterminé, on détecte que la perte de pression est acceptable, et si Vp est supérieure à ce seuil prédéterminé, on détecte que la perte de pression n'est pas acceptable.

Dans un mode de réalisation préférentiel, le seuil prédéterminé est exprimé en pourcentage, et est, par exemple, entre 4% et 10% par 24h, préférentiellement de l'ordre de 5%/24 h.

Dans un mode de réalisation préférentiel, la vitesse de perte de pression est calculée comme suit : $V_p = (P_0 - P_{0,eq})/P_c * (t-t0)$ où $P_{0,eq}$ est la pression qu'il aurait fallu avoir à l'instant $t_0$ pour que la pression attendue à l'instant t soit égale à $P_m$.

Dans un mode de réalisation préférentiel, le calcul de $P_{0,eq}$ dépend de l'état thermique du pneu (homogène ou hétérogène) :

- Si l'état thermique est homogène, on calcule $P_{0,eq} = P_m/(T_m/T_0 + 1)$,

- Si l'état thermique est hétérogène, on utilisera la formule précédemment mentionnée au paragraphe [0012] pour calculer $P_{0,eq}$.

L'invention concerne également un procédé d'assistance à la maintenance pour pneumatique aéronef, comprenant les étapes suivantes :

  ◦ On calcule une pression attendue en utilisant un procédé tel que précédemment décrit,

  ◦ on détermine une pression de décollage $P_{dec}$ en l'absence de maintenance,

  ◦ on calcule le ratio de la pression de décollage $P_{dec}$ sur une pression de consigne Pc à appliquer en fonction du type de pneus, de leurs dimensions, et éventuellement de la charge de l'avion, et en fonction la valeur de ce ratio, on commande une action de maintenance à un opérateur de maintenance.

Dans un mode de réalisation avantageux, le procédé d'assistance à la maintenance comprend en outre les étapes suivantes :

- On détecte si une fuite de pression est présente, en utilisant un procédé tel que précédemment décrit,

- Si une fuite de pression non acceptable est présente, on indique à un opérateur de maintenance la nécessité d'effectuer un contrôle de l'ensemble monté, et on ne commande pas d'opération de maintenance.

Alternativement, dans un autre mode de réalisation, lorsqu'une fuite de pression est détectée, on informe un opérateur de maintenance, mais on commande tout de même une action de maintenance.

Dans un mode de réalisation avantageux, la détermination de la pression de décollage $P_{dec}$ en l'absence de maintenance est effectuée comme suit :

- On détermine une température du pneu au décollage $T_{dec}$,

- On calcule alors $P_{dec} = P_0 * T_{dec}/T_0$.

La température de décollage $T_{dec}$ est déterminée en fonction du temps d'arrêt de l'avion entre l'atterrissage et le décollage suivant. En effet, si ce temps d'arrêt est supérieur à 3h, le pneu aura totalement refroidi, et on aura alors $T_{de}c = T_{amb}$. Si l'avion est amené à redécoller avant ce laps de temps de 3 heures, alors on sait que $T_{dec}$ sera située entre $T_m$ et $T_{amb}$.

Dans un mode de réalisation avantageux, la commande d'une action de maintenance à un opérateur est comprise dans le groupe comprenant :

- Une instruction de ne rien faire si le ratio $P_{dec} / P_c$ est compris entre 100% et 105%,

- Une instruction de gonfler le pneumatique, si le ratio est compris entre 95% et 100%,

- Une instruction de dégonfler le pneumatique, si le ratio est supérieur à 105%,

- Une instruction d'inspecter l'ensemble monté si le ratio est inférieur à 95%.

Dans le cas où il est nécessaire de gonfler le pneumatique, on prévoit alors, dans un mode de réalisation préférentiel, le calcul d'un différentiel de pression

$$\Delta P \quad = A\left(\theta \quad , \frac{P_C}{T_{amb}} * T_0 , T_C \right) * \left(T_m - T_C^m\right) + \frac{P_C}{T_{amb}} * T_0 \quad - P_m$$

De manière préférentielle, des valeurs enregistrées $P_0$, $T_0$ et $t_0$ sont mises à jour après chaque opération de maintenance de pression.

Avantageusement, un tel procédé peut être mis en oeuvre en utilisant un dispositif électronique portable tel qu'un téléphone ou une tablette, le dit dispositif comportant :

- des moyens de communication avec le capteur de pression et température installé sur le pneumatique, pour lire les données enregistrées dans une mémoire du pneumatique,

- des moyens de détermination d'une température ambiante, soit directement, soit par lecture d'une température déterminée par un capteur installé sur l'aéronef,

- un calculateur permettant d'effectuer les calculs mis en oeuvre dans les différents procédés selon l'invention,

- une interface graphique permettant d'afficher, à destination d'un opérateur de maintenance, une ou plusieurs informations comprises dans le groupe comprenant : les pressions et/ou températures mesurées, les pressions calculées, une indication concernant la présence ou non d'une perte de pression, acceptable ou non, une information concernant une opération de maintenance à effectuer.

Dans un mode de réalisation particulier, le dispositif comprend des moyens d'écriture dans une mémoire du capteur.

BREVE DESCRIPTION DES FIGURES

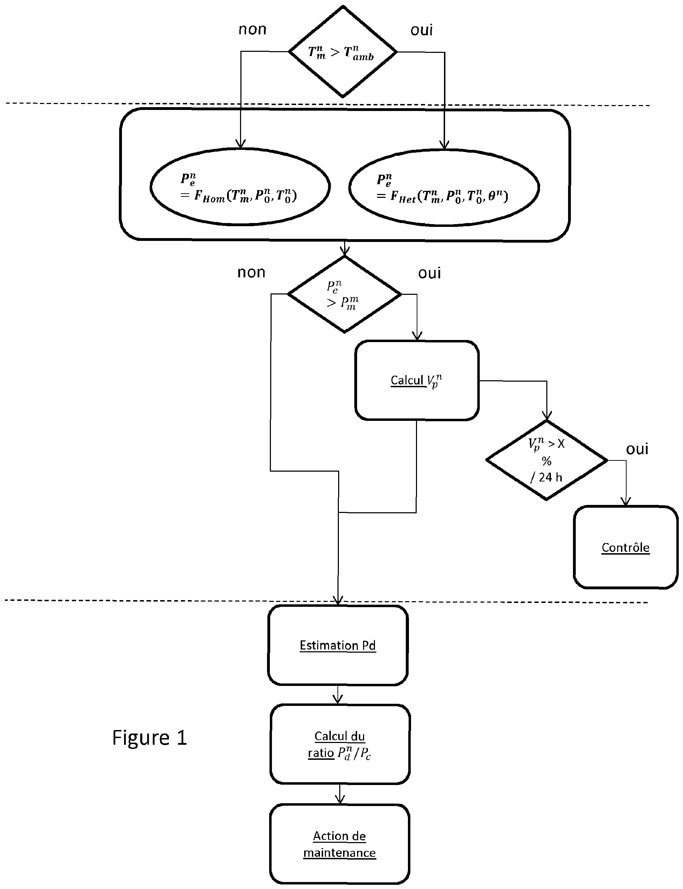

D'autres objectifs et avantages de l'invention apparaîtront clairement dans la description qui va suivre d'un mode de réalisation préféré mais non limitatif, illustré par la figure 1 qui représente graphiquement les différentes étapes mises en oeuvre dans un procédé de maintenance de pneumatiques selon l'invention.

DESCRIPTION DU MEILLEUR MODE DE REALISATION DE L'INVENTION

Nous allons décrire un exemple de mise en oeuvre d'un procédé selon l'invention sur un avion, muni de pneumatiques munis de capteurs de pression et de température, décollant d'un aéroport 1 et atterrissant dans un aéroport 2. On précise ici que l'exemple ne décrira la mise en oeuvre du procédé pour un seul pneumatique, mais que la mise en oeuvre sur les autres pneumatiques s'effectue de manière similaire.

A un instant $t_0$, avant le décollage de l'aéroport 1, on effectue un relevé de la pression et de la température interne du pneu. Ces valeurs, $P_0$ = 13.8bars et $T_0$ = 15°C, sont alors enregistrées dans une mémoire du capteur.

Lorsque l'avion se pose sur l'aéroport 2 à un instant T = t0 + 18 heures, on effectue les mesures suivantes : $P_m$, $T_m$ et $T_{amb}$. Dans cet exemple, on a $P_m$ = 15,1bars, $T_m$ = 70°C et $T_{amb}$ = 25°C. Le capteur de pression et température est positionné avec un angle de 45° par rapport à la verticale.

Nous allons ensuite appliquer les différentes étapes montrées dans le graphe :

- On détermine l'état thermique du pneumatique en comparant $T_m$ et $T_{amb}$ => dans l'exemple $T_m$ étant supérieure à $T_{amb}$ (branche « oui ») on doit utiliser la loi d'hétérogénéité.

- On calcule alors, à l'étape 2, la pression attendue, en appliquant cette loi d'hétérogénéité, et on obtient $P_{att\_het}$ = 15.41 bars.

- On compare alors la pression attendue avec la pression mesurée $P_m$, on a $P_{att\_het} > P_m$.

- Comme la pression attendue est supérieure à la pression mesurée (branche « oui »), on calcule la vitesse de perte de pression dans le pneumatique $V_p$= 2.74 %/24 h.

- Comme la vitesse de perte de pression est dans les limites de tolérance, en l'occurrence inférieure à 5%/24 h, on peut commander une opération de maintenance.

- Pour ce faire, on évalue calcule la pression au décollage $P_{dec}$ et on calcule un ratio $P_{dec} / P_c$, selon un procédé tel que précédemment décrit. Le décollage aura lieu dans 3heures, à une température de décollage $T_{dec}$ = 26.4 °C. On détermine donc que la pression au décollage sera $P_{dec}$ = 13 bars. On a alors un ratio $P_{dec}/P_c$ = 104%, il n'y a donc pas d'action requise.

**Revendications**

1. Procédé de détermination d'une pression de gonflage attendue dans un pneumatique aéronef muni d'un capteur de pression et température, le procédé comprenant les étapes suivantes :

   - dans une étape préliminaire, on enregistre, dans une mémoire du capteur de pression et température, une pression $P_0$ et une température $T_0$ du pneumatique mesurés à un temps $t_o$,
   - à un instant t, on mesure la température d'air interne du pneumatique $T_m$, et la température d'air ambiante $T_{amb}$, et on compare ces deux valeurs,
   - si les deux températures sont égales ou sensiblement égales, on détermine alors une pression attendue à l'instant t, $P_{attendue\_hom}$ sous la forme $P_{attendue\_hom} = P_0{}^*T_m/T_0$,
   - si les deux températures sont différentes, on détermine alors une pression attendue à l'instant t, $P_{attendue\_hét}$, sous la forme $P_{attendue\_hét} = F(T_m, P_0, T_0$ et $\theta)$ où F est une fonction linéaire et/ou polynomiale, et $\theta$ dépend de la position du capteur de pression et température dans le pneumatique à l'instant t.

**2.** Procédé selon la revendication 1, dans lequel la fonction F est une fonction linéaire, et où $P_{attendue\_het}(t) = A(\theta) * (T_m(t) - T_0) + P_0$ avec p1 et p2 qui sont des constantes prédéterminées et où $A(\theta)$ est un paramètre prédéterminé.

**3.** Procédé selon la revendication 1, dans lequel la fonction F est une fonction polynomiale, et $P_{attendue\_het} = A(\theta) * (T_{m(t)} - T_0)^2 + B(\theta) * (T_m - T_0) + P0$ où où $A(\theta)$ et $B(\theta)$ sont des fonctions polynomiales prédéterminées.

**4.** Procédé de détection de perte de pression dans un pneumatique aéronef muni d'un capteur de pression et de température, le procédé comprenant les étapes suivantes :

- On détermine une pression attendue $P_{att}$ du pneumatique en utilisant un procédé selon l'une des revendications 1 à 3,
- On mesure la pression d'air interne $P_m$ du pneumatique à l'instant t,
- On compare les valeurs $P_{att}$ et Pm, et

  ◦ Si Patt = Pm, alors aucune perte de pression n'est détectée,
  ◦ Si Patt > Pm, on détermine une vitesse de perte de pression Vp

    ▪ Si Vp est inférieure à un seuil prédéterminé, on détecte que la perte de pression est acceptable, et
    ▪ si Vp est supérieure à ce seuil prédéterminé, on détecte que la perte de pression n'est pas acceptable.

**5.** Procédé selon la revendication 4, dans lequel le seuil prédéterminé est exprimé en pourcentage, et est compris entre 4 et 10% par 24h.

**6.** Procédé selon la revendication 4 ou 5, dans lequel la vitesse de perte de pression est calculée comme suit : $V_p = (P_0 - P_{0,eq})/P_c * (t-t0)$ où $P_{0,eq}$ est la pression qu'il aurait fallu avoir à l'instant to pour que la pression attendue à l'instant t soit égale à $P_m$.

**7.** Procédé d'assistance à la maintenance pour pneumatique aéronef muni d'un capteur de pression et de température, comprenant les étapes suivantes :

- On calcule une pression attendue en utilisant un procédé selon l'une des revendications 1 à 3,
- on détermine une pression de décollage $P_{dec}$ en l'absence de maintenance,
- on calcule le ratio de la pression de décollage $P_{dec}$ sur une pression de consigne Pc, et en fonction la valeur de ce ratio, on commande une action de maintenance à un opérateur de maintenance.

**8.** Procédé selon la revendication 7, dans lequel la détermination de la pression de décollage $P_{dec}$ en l'absence de maintenance est effectuée comme suit :

- On détermine une température du pneu au décollage $T_{dec}$,
- On calcule alors $P_{dec} = P_0 * T_{dec}/T_0$.

**9.** Procédé selon la revendication 7 ou 8 dans lequel l'action de maintenance commandée, connaissant une pression de consigne $P_c$ du pneumatique, est comprise dans le groupe comprenant :

- Une instruction de ne rien faire si le ratio $P_{dec} / P_c$ est compris entre 100% et 105%,
- Une instruction de gonfler le pneumatique, si le ratio est compris entre 95% et 100%,
- Une instruction de dégonfler le pneumatique, si le ratio est supérieur à 105%,
- Une instruction d'inspecter l'ensemble monté si le ratio est inférieur à 95%.

**Patentansprüche**

**1.** Verfahren zur Bestimmung eines erwarteten Aufblasdrucks in einem Luftfahrzeugreifen, der mit einem Druck- und Temperatursensor versehen ist, wobei das Verfahren die folgenden Schritte umfasst:

- in einem vorbereitenden Schritt werden in einem Speicher des Druck- und Temperatursensors ein Druck $P_0$ und eine Temperatur $T_0$ des Reifens gespeichert, die zu einer Zeit $t_0$ gemessen werden,

- zu einem Zeitpunkt t wird die Innenlufttemperatur des Reifens $T_m$ und die Umgebungslufttemperatur $T_{amb}$ gemessen und diese zwei Werte verglichen,
- wenn die zwei Temperaturen gleich oder im Wesentlichen gleich sind, wird ein zum Zeitpunkt t erwarteter Druck, $P_{erwartet\_hom}$ in Form von $P_{erwartet\_hom} = P_0 * T_m/T_0$ bestimmt,
- wenn die zwei Temperaturen verschieden sind, wird ein zum Zeitpunkt t erwarteter Druck, $P_{erwartet\_hét}$ , in Form von $P_{erwartet\_hét} = F(T_m, P_0, T_0$ und $\theta)$ bestimmt, wobei F eine lineare und/oder Polynomfunktion ist und $\theta$ von der Position des Druck- und Temperatursensors im Reifen zum Zeitpunkt t abhängt.

2. Verfahren nach Anspruch 1, wobei die Funktion F eine lineare Funktion ist und wobei $P_{erwartet\_het}(t) = A(\theta) * (T_m(t)-T_0)+P_0$, mit p1 und p2, die vorbestimmte Konstanten sind, und wobei $A(\theta)$ eine vorbestimmter Parameter ist.

3. Verfahren nach Anspruch 1, wobei die Funktion F eine Polynomfunktion ist und wobei $P_{erwartet\_het} = A(\theta) * (T_{m(t)}-T_0)^2 + B(\theta) * (T_m-T_0) + P0$, wobei $A(\theta)$ und $B(\theta)$ vorbestimmte Polynomfunktionen sind.

4. Verfahren zur Bestimmung eines erwarteten Aufblasdrucks in einem Luftfahrzeugreifen, der mit einem Druck- und Temperatursensor versehen ist, wobei das Verfahren die folgenden Schritte umfasst:

   - Es wird ein erwarteter Druck $P_{erw}$ des Reifens unter Nutzung eines Verfahrens nach einem der Ansprüche 1 bis 3 bestimmt,
   - Es wird der Innenluftdruck $P_m$ des Reifens zum Zeitpunkt t gemessen,
   - Die Werte $P_{erw}$ und Pm werden verglichen, und

      o Wenn Perw = Pm, dann wird kein Druckverlust detektiert,
      o Wenn Perw > Pm, wird eine Druckverlustgeschwindigkeit Vp bestimmt
         ▪ Wenn Vp kleiner als eine vorbestimmte Schwelle ist, wird detektiert, dass der Druckverlust akzeptabel ist, und
         ▪ Wenn Vp größer als diese vorbestimmte Schwelle ist, wird detektiert, dass der Druckverlust nicht akzeptabel ist.

5. Verfahren nach Anspruch 4, wobei die vorbestimmte Schwelle in Prozent ausgedrückt ist und zwischen 4 und 10 % pro 24h liegt.

6. Verfahren nach Anspruch 4 oder 5, wobei die Druckverlustgeschwindigkeit wie folgt berechnet wird: $V_p = (P_0 - P_{0,eq})/P_c * (t-t0)$ wobei $P_{0,eq}$ der Druck ist, der zum Zeitpunkt $t_0$ vorhanden gewesen sein müsste, damit der zum Zeitpunkt t erwartete Druck gleich $P_m$ ist.

7. Verfahren zur Unterstützung bei der Wartung für einen Flugzeugreifen, der mit einem Druck- und Temperatursensor versehen ist, umfassend die folgenden Schritte:

   - Es wird ein erwarteter Druck unter Nutzung eines Verfahrens nach einem der Ansprüche 1 bis 3 berechnet,
   - Es wird ein Abhebedruck $P_{dec}$ ohne Wartung bestimmt,
   - Es wird das Verhältnis des Abhebedrucks $P_{dec}$ zu einem Vorgabedruck Pc berechnet und je nach dem Wert dieses Verhältnisses wird eine Wartungsaktion bei einem Wartungstechniker in Auftrag gegeben.

8. Verfahren nach Anspruch 7, wobei das Bestimmen des Abhebedrucks $P_{dec}$ ohne Wartung wie folgt durchgeführt wird:

   - Es wird eine Temperatur des Reifens beim Abheben $T_{dec}$ bestimmt,
   - Es wird $P_{dec} = P_0 * T_{dec}/T_0$ berechnet.

9. Verfahren nach Anspruch 7 oder 8, wobei die in Auftrag gegebene Wartungsaktion unter Berücksichtigung eines Vorgabedrucks $P_c$ in der Gruppe enthalten ist, die Folgendes umfasst:

   - Eine Anweisung, nichts zu tun, wenn das Verhältnis $P_{dec} / P_c$ zwischen 100 % und 105 % liegt,
   - Eine Anweisung, den Reifen aufzublasen, wenn das Verhältnis zwischen 95 % und 100 % liegt,
   - Eine Anweisung, Luft aus dem Reifen abzulassen, wenn das Verhältnis größer als 105 % ist,
   - Eine Anweisung, die montierte Einheit zu überprüfen, wenn das Verhältnis kleiner als 95 % ist.

**Claims**

1.  Method for determining an inflation pressure expected in an aircraft tyre provided with a pressure and temperature sensor, the method comprising the following stages:

    - in a preliminary stage, a pressure $P_0$ and a temperature $T_0$ of the tyre, measured at a time $t_0$, are recorded in a memory of the pressure and temperature sensor,
    - at a moment t, the internal air temperature $T_m$ of the tyre and the ambient air temperature $T_{amb}$ are measured and these two values are compared,
    - if the two temperatures are equal or substantially equal, a pressure expected at the moment t, $P_{expected\_hom}$, is then determined in the form $P_{expected\_hom} = P_0 * T_m/T_0$,
    - if the two temperatures are different, a pressure expected at the moment t, $P_{expected\_het}$, is then determined in the form $P_{expected\_het} = F(T_m, P_0, T_0$ and $\theta)$ where F is a linear and/or polynomial function and $\theta$ depends on the position of the pressure and temperature sensor in the tyre at the moment t.

2.  Method according to Claim 1, in which the function F is a linear function, and where $P_{expected\_het}(t) = A(\theta) * (T_m(t) - T_0) + P_0$ with $p_1$ and $p_2$ which are predetermined constants and where $A(\theta)$ is a predetermined parameter.

3.  Method according to Claim 1, in which the function F is a polynomial function, and where $P_{expected\_het} = A(\theta) * (T_m(t) - T_0)^2 + B(0) * (T_m - T_0) + P_0$ where $A(\theta)$ and $B(\theta)$ are predetermined polynomial functions.

4.  Method for the detection of loss of pressure in an aircraft tyre provided with a pressure and temperature sensor, the method comprising the following stages:

    - An expected pressure $P_{exp}$ of the tyre is determined using a method according to one of Claims 1 to 3,
    - The internal air pressure $P_m$ of the tyre at the moment t is measured,
    - The values $P_{exp}$ and $P_m$ are compared, and

      ∘ If $P_{exp} = P_m$, then no loss of pressure is detected,
      ∘ If $P_{exp} > P_m$, a rate of loss of pressure $V_p$ is determined,

        ▪ If $V_p$ is less than a predetermined threshold, it is detected that the loss of pressure is acceptable and,
        ▪ if $V_p$ is greater than this predetermined threshold, it is detected that the loss of pressure is not acceptable.

5.  Method according to Claim 4, in which the predetermined threshold is expressed as percentage and is between 4 and 10% per 24 h.

6.  Method according to Claim 4 or 5, in which the rate of loss of pressure is calculated as follows: $V_p = (P_0 - P_{0,eq})/P_c * (t-t_0)$, where $P_{0,eq}$ is the pressure which it would be necessary to have at the moment $t_0$ in order for the pressure expected at the moment t to be equal to $P_m$.

7.  Method for assistance in the maintenance for an aircraft tyre provided with a pressure and temperature sensor, comprising the following stages:

    - an expected pressure is calculated using a method according to one of Claims 1 to 3,
    - a takeoff pressure $P_{tak}$ in the absence of maintenance is determined,
    - the ratio of the takeoff pressure $P_{tak}$ to a set pressure $P_s$ is calculated and, depending on the value of this ratio, a maintenance operator is ordered to carry out a maintenance action.

8.  Method according to Claim 7, in which the takeoff pressure $P_{tak}$ in the absence of maintenance is determined as follows:

    - A temperature of the tyre at takeoff $T_{tak}$ is calculated,
    - $P_{tak} = P_0 * T_{tak}/T_0$ is then calculated.

9.  Method according to Claim 7 or 8, in which the maintenance action ordered, knowing a set pressure $P_s$ of the tyre, is included in the group consisting of:

- An instruction to do nothing if the $P_{tak}/P_s$ ratio is between 100% and 105%,
- An instruction to inflate the tyre if the ratio is between 95% and 100%,
- An instruction to deflate the tyre if the ratio is greater than 105%,
- An instruction to inspect the fitted assembly if the ratio is less than 95%.

Figure 1

**EP 3 700 763 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3069903 A1
- US 2015224831 A1
- FR 2829423 A1
- DE 2626475 A1
- WO 2009036547 A1